# EUROPEAN PATENT APPLICATION

(11) **EP 1 279 784 A1**
(43) Date of publication of application: **29.01.2003**
(21) Application number: 01830503.7
(22) Date of filing: 27.07.2001
(51) Int. Cl.: E05B 47/00, E05B 65/19, H01H 37/32, E05B 65/12

(54) **Motor-vehicle door lock, particularly for a rear door or a bonnet, having shape memory actuating means**

(71) Applicant: Oxford Automotive Italia di Gessaroli S.r.l., 10028 Trofarello (Torino) (IT)
(72) Inventor: Butera, Francesco, 10100 Torino (IT); Alacqua, Stefano, 10090 Rivoli (Torino) (IT); Ciardo, Antonio, c/o Oxford Automotive Italia, 10028 Trofarello (Torino) (IT); Gessaroli, Agostino, c/o Oxford Automotive Italia, 10028 Trofarello (Torino) (IT)
(74) Representative: Notaro, Giancarlo

(57) **Abstract**

Latch for a motor-vehicle door comprising actuator devices including one element (W), made of shape memory metallic alloy, and means (19) for supplying an electrical current across said shape memory element (W), to heat it, obtain a variation of its phase and open the latch.

## Description

This invention relates to latches for a motor-vehicle door, and particularly to a latch for tailgate or rear deck of a motor-vehicle, of the type comprising:
- a latch support body and a striker, co-operating with the latch, destined to be fitted on the body of the motor-vehicle and on the door, or vice versa, respectively,
- a catch element, fitted in the support body, which turns following the impact with the striker when the door is closed, so to turn from a released position of the striker to an engaged position of the striker,
- elastic means, tending to return the catch element to its released position,
- a fastening lever of the catch element, suitable for withholding the catch element in the latched position of the striker, counteracting the action of said elastic means, said fastening lever pivoting on the body of the latch and being elastically recalled towards an engaged position of the catch element, and
- actuator means, for controlling a rotation of the fastening lever towards a released position, in which the catch element is free to return to the released position of the striker for opening the latch.

The object of this invention is to make a latch of the perfected type, which is simple and reliable.

In order to attain this purpose, this invention relates to a latch of the type described above, characterised in that said actuator means comprise at least one element made of shape memory metallic alloy, and means for supplying electrical current across said shape memory element, so to heat it and obtain a variation of phase that causes the rotation of said fastening lever to the released position of the catch element.

The use of actuator means made of shape memory metallic alloys, typically nickel and titanium, is known and described in technical literature. These elements are deformed when a certain predetermined transition temperature is reached, in the order of 100°C, for example.

In a preferred form of embodiment of this invention, said shape memory element consists of a wire arranged between said fastening lever and said support body. Preferably, the wire is bent as a U around a winding pin connected to the fastening lever, so to present two parallel, adjacent portions with two ends of wire both connected to the support body and two fixed electrical connections. According to a preferred form of embodiment, said shape memory metallic alloy wire is embedded in a layer of silicon resin favouring the rapid cooling of the wire as the electrical current ceases.

In said preferred form of embodiment, an electrical control board is included to supply electrical current to the shape memory wire, connected to the latch body and connected to actuation means and to a position sensor of the fastening lever, to cut off the electrical current to the wire when the fastening lever reaches its released position.

Said actuator means can consist of a button, which can be operated from inside the motor-vehicle, and/or by the latch operating key, or by any other direct or remote control means.

This invention will be better explained by the following detailed descriptions with reference to the accompanying figure as non-limiting example, whereas:
- figure 1 is a perspective view of a latch according to this invention,
- figure 2 is a partial cross-section view of the latch in figure 1,
- figure 3 is a diagram illustrating the control system of the latch shown in figures 1 and 2,
- figure 4 shows a variant, and
- figure 5 shows a perspective view of detail of the latch according to this invention on a larger scale.

With references to drawings, numeral 1 generally indicates a latch for the rear deck of a motor-vehicle, comprising a support body 2, made of pressed metallic sheet, destined to be fastened to the body of the motor vehicle, and a striker 3, destined to be fastened to the rear deck. In the example shown, the striker 3 comprises a sheet plate 4, with holes 5 for screws, for fastening the plate to the rear deck, and a bracket 6, consisting of a circular cross-section pin, bent in the shape of a U, comprising a vertical branch 6a forming the proper striker, destined to co-operate with the latch 1.

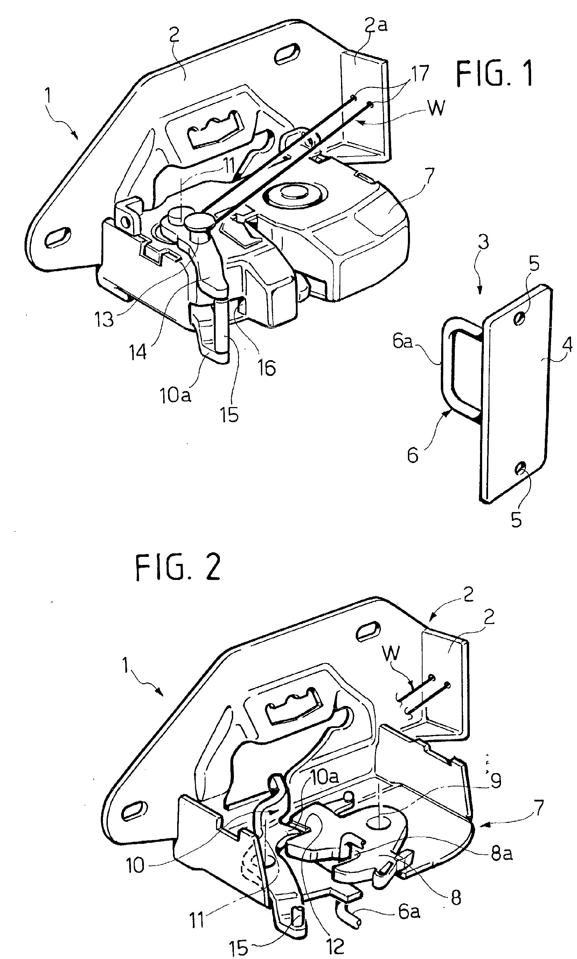

A casing 7 is fastened to the support body 2. The casing contains a catch element 8 (figure 2). The catch element consists of a fork-shaped plate, which is connected to the casing 7 in point 9, and which is recalled by elastic means (not visible in the drawings) towards a released position, in which the recess 8a of the fork position is facing outwards. From this released position, the catch element 8 can turn to the engaged position of the striker 6a (figure 2), following the impact of the striker 6a against the fork element 8 when the rear deck is closed. Having reached the fastened position shown in figure 2, the catch element 8 is withheld in this position by a fastening lever 10, which is articulated in position 11 and a side of the casing 7, and which is pushed by elastic means (not visible) towards the engaged position shown in figure 2, in which a tooth 10a of the lever 10 is engaged in a recess 12 of the edge of the catch element 8 to withhold said element in the fastened position of striker 6a, against the action of the elastic means recalling the catch element 8 towards the open position.

The structure and the arrangement described above are essentially conventional. For this reason, additional details related to said construction parts are not provided herein, since these details can be made in any known way and do not individually fall within the context of this invention.

In traditional latches, when the latch is in the closed position shown in figure 2, it can be opened by causing a rotation of the lever 10 around the respective articulation 11 towards a released position of the catch element 8, in which said element is free to return to the released position of the striker 6a, pushed by the respective recalling elastic means. The release of lever 10 is controlled, in traditional latches, by means of a mechanical transmission system, by a key associated to the latch and/or by a control lever or button, which can be operated inside the passenger compartment, and/or by an electromagnetic actuator coupled to the latch.

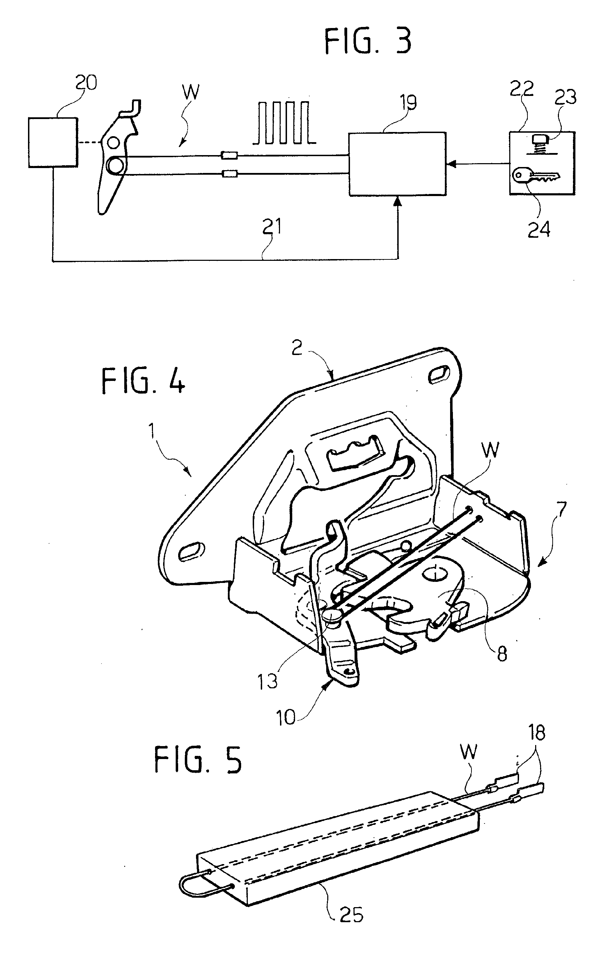

In the form of embodiment of this invention illustrated in the drawings, the release of lever 10 is controlled by a wire W, made of shape memory metallic alloy. In the example shown in figure 1, 2, the wire W is wound around a winding pin 13 of a lever 14, which is articulated on an axis coinciding with the axis 11 on the external surface of the casing 7, which is rigidly connected by a pointed element 15 to an end 10a of the lever 10, which is let out from casing 7 through a slot 16 in the casing. The wire W, consequently, presents two parallel, adjacent branches and two extremities 17, connected to two blade terminals 18 (visible in figure 5), which are electrically connected to an electronic control board 19 (figure 3), which is fitted on the external surface of a side 2a of the support body 2. The electronic board 19 controls the electrical current supply crossing the wire W. When the wire W is crossed by electrical current, it is heated by Joule effect and, consequently, is effected by a status transformation, which makes it shorter. This shortening makes the lever 14 turn on the axis 11 and, consequently, release the fastening lever 10 from the catch element 8. The rotation of the lever 10 is promptly detected by a sensor of any known type (indicated with numeral 20 in figure 3), associated to the lever 10, which sends a signal 21 to the electronic board 19 to interrupt the supply of electrical current across the wire W.

The heating of wire W is controlled by actuating means 22 connected to the electronic board 19 and is represented, for example, by a control button or lever 23 arranged inside the passenger compartment of the motor-vehicle and/or by a key 24 associated to the latch and/or by any other type of direct or remote control.

Figure 4 illustrates a variant in which the wire W is arranged inside the casing 7 and is wound on a pin 13, which is directly made over the lever 10.

Finally, figure 5 illustrates an additional preferred characteristic of this invention, which can be adopted both in the case of figures 1, 2 and in the case of figure 4, in which the wire W is embedded in a layer 25 of silicon resin, the purpose of which is to accelerate cooling of the wire W after interrupting the passage of electrical current, so to permit the passage of electrical current to allow the immediate return of the lever 10 to its home position.

Naturally, numerous changes can be implemented to the construction and forms of embodiment of the invention herein envisaged, all comprised within the context of the concept characterising this invention, as defined by the following claims.

## Claims

1. Latch for a motor-vehicle door, particularly a latch for tailgate or rear deck of a motor-vehicle, comprising:
- a latch support body (2) and a striker (6a), co-operating with the latch, destined to be fitted on the body of the motor-vehicle and on the door, or vice versa,
- a catch element (8), fitted in the support body (7), which turns following the impact with the striker (6a) when the door is closed, so to turn from a released position of the striker (6a) to an engaged position of the striker,
- elastic means, tending to return the catch element (8) to its released position,
- a fastening lever (10) of the catch element (8), suitable for withholding the catch element (8) in the latched position of the striker (6a), counteracting the action of said elastic means, said fastening lever (10) pivoting on the body of the latch (2) and being elastically recalled towards an engaged position of the catch element, and
- actuator means (W), for controlling a rotation of the fastening lever (10) towards a released position, in which the catch element (8) is free to return to the released position of the striker (6a) for opening the latch,
**characterised in that** said actuator devices comprise at least one element (W), made of shape memory metallic alloy, and means (19) for supplying an electrical current across said shape memory element (W), to heat it and obtain a variation of its phase, causing the rotation of said fastening lever (10) in the released position of the catch element (8).

2. Latch according to claim 1, **characterised in that** said shape memory (W) is made of a wire arranged between said fastening lever (10) and said support body (2).

3. Latch according to claim 1, **characterised in that** the wire (W) is bent as a U around a winding pin (13), connected to the fastening lever (10), so to present two parallel, adjacent portions with the two ends of the wire (W) connected both to the supporting body (2).

4. Latch according to any of the claims above, **characterised in that** the wire (W) is embedded in a layer of silicon resin.

5. Latch according to claim 1, **characterised in that** it includes an electronic control board (19) for supplying electrical current to the shape memory (19) connected to the latch board (2) and connected to actuator means (22), and a position sensor (20) of the fastening lever (10), for cutting off the electrical power to the shape memory element (W) when the fastening lever (10) reaches the released position.

6. Latch according to claim 4, **characterised in that** said actuator means comprise a button control and/or a key or remote control device.
